(19) Europäisches Patentamt
European Patent Office
Office européen des brevets

(11) EP 3 904 401 A1

(12) **EUROPEAN PATENT APPLICATION**
published in accordance with Art. 153(4) EPC

(43) Date of publication:
**03.11.2021 Bulletin 2021/44**

(21) Application number: **19903903.3**

(22) Date of filing: **25.12.2019**

(51) Int Cl.:
***C08F 16/06*** *(2006.01)* ***C09K 8/508*** *(2006.01)*
***E21B 43/26*** *(2006.01)*

(86) International application number:
**PCT/JP2019/051042**

(87) International publication number:
**WO 2020/138251 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018245095**

(71) Applicant: **Mitsubishi Chemical Corporation**
**Chiyoda-ku**
**Tokyo 100-8251 (JP)**

(72) Inventors:
- **HIRANO, Yasuhiro**
  **Tokyo 100-8251 (JP)**
- **SAKA, Takahiro**
  **Tokyo 100-8251 (JP)**
- **TANIGUCHI, Ryosuke**
  **Tokyo 100-8251 (JP)**
- **FURO, Chizuko**
  **Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

# (54) DIVERTING AGENT AND METHOD FOR CLOSING CRACK IN WELL USING SAME

(57) An object of the present invention is to provide a diverting agent that does not completely dissolve for a certain period of time (about 5 minutes to 3 hours) and has high cohesiveness between particles. The present invention relates to a diverting agent containing a polyvinyl alcohol-based resin having a degree of saponification of 65 mol% to 95 mol%.



Printed by Jouve, 75001 PARIS (FR)

**Description**

TECHNICAL FIELD

The present invention relates to a diverting agent and a mining method using the diverting agent. More specifically, the present invention relates to a diverting agent to be used during construction of an excavation method using a hydraulic fracturing method.

BACKGROUND ART

For collecting petroleum or other underground resources, a hydraulic fracturing method in which high-pressure water is injected into an underground shale layer to cause fractures is widely adopted. In the hydraulic fracturing method, at first, a vertical hole (vertical well) with a depth of several thousand of meters is excavated vertically by a drill, and then, when the vertical hole reaches the shale layer, a horizontal hole (horizontal well) with a diameter of ten to several tens of centimeters is excavated horizontally. By filling the vertical well and the horizontal well with a fluid and pressurizing the fluid, fractures are generated from the well. Natural gas, petroleum (shale gas/oil), or the like in the shale layer flows out from the fractures, and is then collected. According to such a method, a resource inflow cross-section of the well can be increased by generation of fractures and underground resources can be efficiently collected.

In the hydraulic fracturing method described above, prior to generation of fractures by fluid pressurization, preliminary blasting called perforation is performed in the horizontal well. By such preliminary blasting, borings are made from the well to a production layer. After that, by injecting a fracturing fluid into the well, the fluid flows into these borings, and a load is applied to the borings. Then, fractures are generated in these borings and grow into fractures in a size suitable for resource collection.

In the hydraulic fracturing method, a part of fractures that have already been generated are temporarily filled with an additive called a diverting agent in order to grow fractures that have already been generated larger or to generate more fractures. By temporarily filling a part of the fractures with the diverting agent and pressurizing the fracturing fluid filled in the well in this state, the fluid may enter other fractures, so that other fractures can grow larger or new fractures can be generated.

Since the diverting agent is used to temporarily fill the fractures as described above, a diverting agent which can maintain the shape for a certain period of time and disappears by hydrolysis when natural gas, petroleum, or the like is collected is used. For example, various techniques in which a hydrolyzable resin such as polyglycolic acid or polylactic acid is used as a diverting agent have been proposed.

PTL 1 has proposed a temporary sealing agent for use in well boring, which contains polyglycolic acid having high biodegradability among biodegradable aliphatic polyester-based resins.

In addition, PTL 2 has proposed a powder containing particles of polylactic acid which is a biodegradable resin, and in the powder, 50 mass% or more of particles do not pass through a sieve having an opening of 500 μm and the particles have an angle of repose of 51 degrees or more.

Further, PTL 3 has proposed hydrolyzable particles having a dispersion structure in which fine particles of a polyoxalate having a high biodegradability for adjusting the hydrolysis performance of polylactic acid are distributed in the polylactic acid, and having an average particle diameter ($D_{50}$) in a range of 300 μm to 1,000 μm and a roundness, that is, a minor axis/major axis ratio, of 0.8 or more.

Furthermore, PTL 4 has proposed polyoxalate particles having an average particle diameter ($D_{50}$) in a range of 300 μm to 1,000 μm and a roundness, that is, a minor axis/major axis ratio, of 0.8 or more.

CITATION LIST

PATENT LITERATURE

PTL 1: WO 2015/072317
PTL 2: JP-A-2016-56272
PTL3: JP-A-2016-147971
PTL4: JP-A-2016-147972

## SUMMARY OF INVENTION

### TECHNICAL PROBLEM

In the hydraulic fracturing method, it is necessary to fill, with the diverting agent, the fractures that have already been generated without gaps in order to grow the fractures or generate new fractures. At this time, when particles of the diverting agent do not easily aggregate with each other, the diverting agent may dissipate into water and the fractures cannot be sufficiently filled.

Therefore, an object of the present invention is to provide a diverting agent that does not completely dissolve for a certain period of time (about 5 minutes to 3 hours) and has high cohesiveness between particles.

### SOLUTION TO PROBLEM

As a result of intensive studies, the present inventors have found that when the diverting agent contains a polyvinyl alcohol-based resin having a degree of saponification in a specific range, the above problems can be solved.

That is, the present invention relates to the following <1> to <3>.

<1> A diverting agent, containing: a polyvinyl alcohol-based resin having a degree of saponification of 65 mol% to 95 mol%.

<2> The diverting agent according to <1>, wherein the polyvinyl alcohol-based resin has a dissolution rate of 10 mass% to 50 mass% after 15 minutes of immersing 1 g of the polyvinyl alcohol-based resin in 100 g of water at 23°C.

<3> A method of temporarily filling a fracture generated in a well, the method including: allowing the diverting agent according to <1> or <2> to flow into a fracture to be filled with a flow of a fluid in the well.

### ADVANTAGEOUS EFFECTS OF INVENTION

The diverting agent of the present invention has high cohesiveness between particles. Therefore, the diverting agent of the present invention does not easily dissipate into water when filling a fracture, and has excellent filling properties for the fracture.

### DESCRIPTION OF EMBODIMENTS

Hereinafter, the present invention will be described in detail, but these show examples of desirable embodiments, and the present invention is not specified in these contents.

The term "polyvinyl alcohol" is sometimes simply referred to as "PVA".

In the present invention, (meth)allyl means allyl or methallyl, (meth)acryl means acryl or methacryl, and (meth)acrylate means acrylate or methacrylate.

[PVA-based Resin]

A diverting agent of the present invention contains a PVA-based resin having a degree of saponification of 65 mol% to 95 mol%. The degree of saponification can be measured in accordance with JIS K 6726:1994.

When the degree of saponification of the PVA-based resin is 65 mol% or more, the amount of hydroxy groups increases and the affinity with water is improved, so that the water solubility of the PVA-based resin can be increased. In addition, when degree of saponification of the PVA-based resin is 95 mol% or less, the crystallinity does not become too high, and the water solubility of the PVA-based resin can be increased.

Therefore, the PVA-based resin for use in the present invention has high water solubility. In the PVA-based resin having high water solubility, the partially dissolved PVA-based resin works to bond the particles together for a certain period of time (about 5 minutes to 3 hours), and as a result, the cohesiveness between the particles of the PVA-based resin is improved. Therefore, the diverting agent of the present invention containing the PVA-based resin has high cohesiveness between particles.

From the viewpoint of water solubility, the degree of saponification of the PVA-based resin for use in the present invention is preferably 70 mol% to 90 mol%, and more preferably 72 mol% to 88 mol%.

Examples of a method of setting the degree of saponification of the PVA-based resin for use in the present invention within the above range include a method of adjusting the type and amount of a solvent and a catalyst, the reaction temperature, etc. used in saponification during the production of the PVA-based resin.

In addition, the PVA-based resin for use in the present invention preferably has a dissolution rate (hereinafter, may be simply referred to as "dissolution rate after 15 minutes") of 10 mass% to 50 mass%, more preferably 15 mass%

to 45 mass%, and still more preferably 20 mass% to 40 mass% after 15 minutes of immersing 1 g of the PVA-based resin in 100 g of water at 23°C.

When the dissolution rate after 15 minutes is 10 mass% or more, the cohesiveness between the particles of the PVA-based resin is further improved. When the dissolution rate after 15 minutes is 50 mass% or less, the filling properties for fractures can be further improved.

The dissolution rate after 15 minutes can be calculated by the following method.

That is, a 140 mL glass container with a lid containing 100 g of water is put into a thermostatic chamber, and the water temperature is set to 23°C. The long sides of 120 mesh (aperture: 125 μm, 10 cm × 7 cm) made of nylon are folded in half, and both ends are heat-sealed to obtain a bag-like mesh (5 cm × 7 cm).

1 g of the PVA-based resin is put into the obtained bag-like mesh, the opening is heat-sealed to obtain a bag-like mesh containing the PVA-based resin, and then the mass is measured. The bag-like mesh containing the PVA-based resin is immersed in the glass container. After standing for 15 minutes in the thermostatic chamber at 23°C, the bag-like mesh containing the PVA-based resin is taken out of the glass container and dried at 140°C for 3 hours, and the mass of the bag-like mesh containing the PVA-based resin is measured. The mass of the PVA-based resin remaining in the bag-like mesh is calculated based on the mass before immersion, and the dissolution rate after 15 minutes of the PVA-based resin is calculated according to the following equation.

In following equation, the solid fraction (mass%) of the PVA-based resin can be calculated by drying the PVA-based resin at 105°C for 3 hours and measuring the mass of the PVA-based resin before and after drying.

[Math. 1]

$$\text{DISSOLUTION RATE AFTER 15 MINUTES (MASS\%)} = \left\{ 1\ (g) - \frac{\text{MASS (g) OF PVA-BASED RESIN REMAINING IN BAG-LIKE MESH}}{1\,(g) \times \frac{\text{SOLID FRACTION (MASS\%) OF PVA-BASED RESIN}}{100}} \right\} \times 100$$

The average polymerization degree of the PVA-based resin for use in the present invention (measured according to JIS K 6726:1994) is preferably 100 to 3,500, more preferably 150 to 3000, still more preferably 200 to 2,500, and particularly preferably 300 to 2,000. When the average polymerization degree is too large, the production tends to be difficult.

The average particle diameter of the PVA-based resin for use in the present invention is preferably 100 μm to 3,000 μm, more preferably 150 μm to 2,000 μm, and still more preferably 200 μm to 1,000 μm.

When the average particle diameter of the PVA-based resin is too small, handling tends to be difficult due to scattering. When the average particle diameter of the PVA-based resin is too large, the reaction tends to be non-uniform in the case of post-reaction and modification.

The average particle diameter is a particle diameter at which the PVA-based resin is sieved by a dry sieving test method and the integrated value is 50%.

The viscosity of a 4 mass% aqueous solution of the PVA-based resin for use in the present invention is preferably 2 mPa·s to 40 mPa·s, more preferably 3 mPa·s to 30 mPa·s, and still more preferably 4 mPa·s to 20 mPa·s. When the viscosity is too low, the water resistance tends to decrease, and when the viscosity is too high, the viscosity increases, and handling and production tend to be difficult.

The viscosity of the 4 mass% aqueous solution of the PVA-based resin for use in the present invention is a viscosity at 20°C measured in accordance with JIS K 6726:1994, by preparing a 4 mass% aqueous solution of the PVA-based resin.

The PVA-based resin for use in the present invention has a vinyl alcohol structural unit corresponding to the degree of saponification and a vinyl acetate structural unit of an unsaponified moiety.

In the present invention, examples of the PVA-based resin include a modified PVA-based resin obtained by copolymerizing various monomers during the production of a vinyl ester-based resin and being saponified, and a variety of post-modified PVA-based resins obtained by introducing various functional groups into an unmodified PVA-based resin by post-modification, in addition to an unmodified PVA-based resin. Such modification can be performed as long as the water solubility of the PVA-based resin is not lost. In some cases, the modified PVA-based resin may be further post-modified.

Examples of the monomer for use in the copolymerization of the vinyl ester-based monomer in the production of the vinyl ester-based resin include: olefins such as ethylene, propylene, isobutylene, α-octene, α-dodecene, and α-octadecene; unsaturated acids such as an acrylic acid, a methacrylic acid, a crotonic acid, a maleic acid, a maleic anhydride, and an itaconic acid, or a salt thereof, a mono-, di-alkyl ester thereof or the like; nitriles such as acrylonitrile and methacrylonitrile; amides such as acrylamide and methacrylamide; olefin sulfonic acids such as an ethylene sulfonic acid, an allyl sulfonic acid, and a methallyl sulfonic acid or a salt thereof; alkyl vinyl ethers; N-acrylamidomethyltrimethylammonium chloride; allyltrimethylammonium chloride; dimethylallyl vinyl ketone; N-vinyl pyrrolidone; vinyl chloride; vinylidene chloride; polyoxyalkylene (meth)allyl ethers such as polyoxyethylene (meth)allyl ether and polyoxypropylene (meth)allyl ether; polyoxyalkylene (meth)acrylates such as polyoxyethylene (meth)acrylate and polyoxypropylene (meth)acrylate; polyoxyalkylene (meth)acrylamides such as polyoxyethylene (meth)acrylamide and polyoxypropylene (meth)acrylamide; polyoxyethylene [1-(meth)acrylamide-1,1-dimethylpropyl]ester; polyoxyalkylene vinyl ethers such as polyoxyethylene vinyl ether and polyoxypropylene vinyl ether; polyoxyalkylene allylamines such as polyoxyethylene allylamine and polyoxypropylene allylamine; polyoxyalkylene vinylamines such as polyoxyethylene vinylamine and polyoxypropylene vinylamine; and hydroxy group-containing α-olefins such as 3-buten-1-ol, 4-penten-1-ol, and 5-hexen-1-ol, or derivatives such as an acylated product thereof.

In addition, examples thereof include diol-containing compounds such as 3,4-dihydroxy-1-butene, 3,4-diacyloxy-1-butene, 3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diasiloxy-1-pentene, 4,5-dihydroxy-3-methyl-1-pentene, 4,5-diasiloxy-3-methyl-1-pentene, 5,6-dihydroxy-1-hexene, 5,6-diasiloxy-1-hexene, glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, glycerin monoisopropenyl ether, vinyl ethylene carbonate, and 2,2-dimethyl-4-vinyl-1,3-dioxolane.

Examples of the modified PVA-based resin include a PVA-based resin having a primary hydroxy group in the side chain, and an ethylene-modified PVA-based resin. Among these, a PVA-based resin having a primary hydroxy group in the side chain is preferred in terms of being excellent in melt moldability.

The number of the primary hydroxy group in the PVA-based resin having a primary hydroxy group in the side chain is generally 1 to 5, preferably 1 to 2, and particularly preferably 1. In addition to the primary hydroxy group, a secondary hydroxy group is preferably contained.

Examples of the PVA-based resin having a primary hydroxy group in the side chain include a modified PVA-based resin having a 1,2-diol structural unit in the side chain and a modified PVA-based resin having a hydroxyalkyl group structural unit in the side chain. Among these, it is particularly preferable to use a modified PVA-based resin having a 1,2-diol structural unit in the side chain (hereinafter, may be referred to as "modified PVA-based resin having a side-chain 1,2-diol structural unit") represented by the following general formula (1).

The moiety other than the 1,2-diol structural unit is a vinyl alcohol structural unit and a vinyl ester structural unit in an unsaponified moiety, similar to a general PVA-based resin.

[Chem. 1]

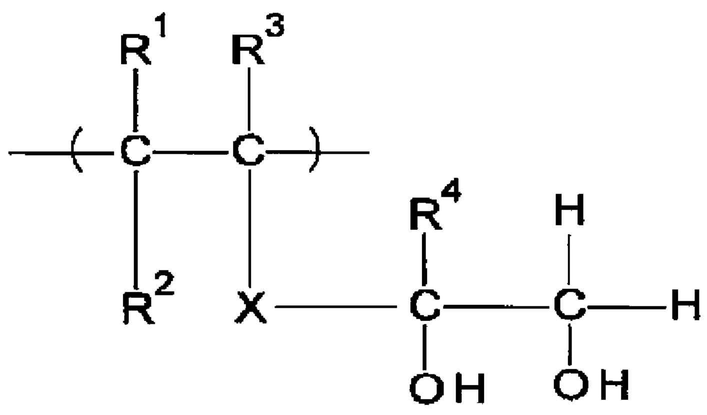

(1)

(In the general formula (1), $R^1$ to $R^4$ each independently represent a hydrogen atom or an alkyl group having 1 to 4 carbon atoms, and X represents a single bond or a bond chain.)

In the above general formula (1), $R^1$ to $R^4$ each independently represent a hydrogen atom or an alkyl group having 1 to 4 carbon atoms. $R^1$ to $R^4$ are preferably all hydrogen atoms, however may be an alkyl group having 1 to 4 carbon atoms as long as the resin properties are not remarkably impaired. The alkyl group is not particularly limited, and is preferably, for example, a methyl group, an ethyl group, an n-propyl group, an isopropyl group, an n-butyl group, an isobutyl group, and a tert-butyl group. The alkyl group may have a substituent such as a halogen group, a hydroxy group, an ester group, a carboxylic acid group, or a sulfonic acid group as needed.

In the above general formula (1), X is a single bond or a bond chain, preferably a single bond in terms of thermal stability and stability under high temperature and acidic conditions, but may be a bond chain as long as the effect of the present invention is not impaired.

Such a bond chain is not particularly limited, and examples thereof include hydrocarbon groups such as an alkylene group, an alkenylene group, an alkynylene group, a phenylene group, and a naphthylene group (these hydrocarbon groups may be substituted with a halogen atom such as a fluorine atom, a chlorine atom or a bromine atom), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, -S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, $-OTi(OR)_2O-$, -Al(OR)-, -OAl(OR)-, and -OAl(OR)O-. Each R is independently a hydrogen atom or an optional substituent, and is preferably a hydrogen atom or an alkyl group (particularly an alkyl group having 1 to 4 carbon atoms). In addition, m is a natural number, and is preferably 1 to 10, particularly preferably 1 to 5.

Among these, the bond chain is preferably an alkylene group having 6 or less carbon atoms, particularly a methylene group, or $-CH_2OCH_2-$ in terms of viscosity stability and heat resistance during production.

In a particularly preferred structure of the 1,2-diol structural unit represented by the general formula (1), $R^1$ to $R^4$ are all hydrogen atoms, and X is a single bond.

Examples of the post-modified PVA-based resin obtained by introducing functional groups by a post-reaction include those having an acetoacetyl group by a reaction with diketene, those having a polyalkylene oxide group by a reaction with ethylene oxide, those having a hydroxyalkyl group by a reaction with an epoxy compound or the like, or those obtained by reacting an aldehyde compound having various functional groups with a PVA-based resin.

In a case where the PVA-based resin for use in the present invention is a modified PVA-based resin, the modification rate in this modified PVA-based resin, that is, the content of a structural unit derived from various monomers in the copolymer, or the content of functional groups introduced by a post-reaction cannot be said unconditionally because the characteristics vary greatly depending on the type of functional group, and is generally 0.1 mol% to 20 mol%.

For example, the modification rate when the PVA-based resin for use in the present invention is the modified PVA-based resin having a side-chain 1,2-diol structural unit is generally 0.1 mol% to 20 mol%, preferably 0.5 mol% to 10 mol%, more preferably 1 mol% to 8 mol%, and particularly preferably 1 mol% to 3 mol%.

When the modification rate is too large, the cohesiveness between the particles tends to be low, and when the modification rate is too small, the dissolution rate after 15 minutes tends to be too small.

The content (modification rate) of the 1,2-diol structural unit in the PVA-based resin for use in the present invention can be determined from a $^1$H-NMR spectrum (solvent: DMSO-$d_6$, internal standard: tetramethylsilane) of a PVA-based resin having a degree of saponification of 100 mol%. Specifically, the content can be calculated based on the peak areas derived from a hydroxy proton, a methine proton, and a methylene proton in the 1,2-diol structural unit, a methylene proton in the main chain, a proton of a hydroxy group linked to the main chain, and the like.

The modification rate when the PVA-based resin for use in the present invention is an ethylene-modified PVA-based resin is generally 0.1 mol% to 15 mol%, preferably 0.5 mol% to 10 mol%, still preferably 1 mol% to 10 mol%, and particularly preferably 5 mol% to 9 mol%.

When the modification rate is too large, the cohesiveness between the particles tends to be low, and when the modification rate is too small, the dissolution rate after 15 minutes tends to be too small.

The melting point of the PVA-based resin for use in the present invention is generally 140°C to 250°C, preferably 150°C to 245°C, more preferably 160°C to 240°C, and still more preferably 170°C to 230°C.

The melting point is a value measured with a differential scanning calorimeter (DSC) at a temperature rising/falling rate of 10°C/min.

The bonding mode of the main chain of the PVA-based resin for use in the present invention is mainly 1,3-diol bonding, and the content of a 1,2-diol bond is about 1.5 mol% to 1.7 mol%. The content of the 1,2-diol bond can be increased by increasing a polymerization temperature during polymerization of the vinyl ester-based monomers, and the content thereof can be increased to 1.8 mol% or more, and further to 2.0 mol% to 3.5 mol%.

Examples of a method for producing the PVA-based resin for use in the present invention include a method of polymerizing vinyl ester-based monomers such as vinyl acetate and performing saponification.

Examples of the vinyl ester-based monomer include vinyl propionate, vinyl butyrate, vinyl caproate, vinyl caprylate, vinyl caprate, vinyl laurate, vinyl myristate, vinyl palmitate, vinyl stearate, vinyl cyclohexanecarboxylate, vinyl piperate, vinyl octylate, vinyl monochloroacetate, vinyl adipate, vinyl methacrylate, vinyl crotonate, vinyl sorbate, vinyl benzoate, vinyl cinnamate, and vinyl trifluoroacetate. From the viewpoint of price and availability, vinyl acetate is preferably used.

The polymerization of the vinyl ester-based monomers can be performed by any known polymerization method such as solution polymerization, suspension polymerization, and emulsion polymerization. Among these, it is preferable to perform the solution polymerization which can remove reaction heat efficiently under reflux. As a solvent for the solution polymerization, an alcohol is generally used, and a lower alcohol having 1 to 3 carbon atoms is preferably used.

For the saponification of the obtained polymer, a conventional known saponification method can be employed. That is, the saponification can be performed using an alkali catalyst or an acid catalyst in a state where the polymer is dissolved in an alcohol or a water/alcohol solvent.

As the alkali catalyst, for example, alkali metal hydroxides such as potassium hydroxide, sodium hydroxide,

sodium methylate, sodium ethylate, potassium methylate, and lithium methylate, or alcoholate can be used.

Generally, saponification is preferably performed by a transesterification reaction using an alkali catalyst in the presence of an anhydrous alcohol solvent in terms of reaction rate or reduction of impurities such as fatty acid salts.

The reaction temperature of the saponification reaction is generally 20°C to 60°C. When the reaction temperature is too low, the reaction rate tends to decrease and the reaction efficiency tends to decrease; when the reaction temperature is too high, the reaction temperature may exceed the boiling point of the reaction solvent, and the safety in production tends to decrease. In a case of performing the saponification under a high pressure using a tower-type continuous saponification tower with high pressure resistance, the saponification can be performed at a higher temperature, for example, 80°C to 150°C, and a PVA-based resin having a high degree of saponification can be obtained in a short time even using a small amount of saponification catalyst.

The modified PVA-based resin having a side-chain 1,2-diol structural unit can be produced by a known production method. For example, the above modified PVA-based resin can be produced by a method described in JP-A-2002-284818, JP-A-2004-285143, or JP-A-2006-95825.

That is, the above modified PVA-based resin can be produced by (i) a method of saponifying a copolymer of a vinyl ester-based monomer and a compound represented by the following general formula (2), (ii) a method of saponifying and decarboxylating a copolymer of a vinyl ester-based monomer and a vinyl ethylene carbonate represented by the following general formula (3), (iii) a method of saponifying and deketalizing a copolymer of a vinyl ester-based monomer and a 2,2-dialkyl-4-vinyl-1,3-dioxolane represented by the following general formula (4), or the like.

[Chem. 2]

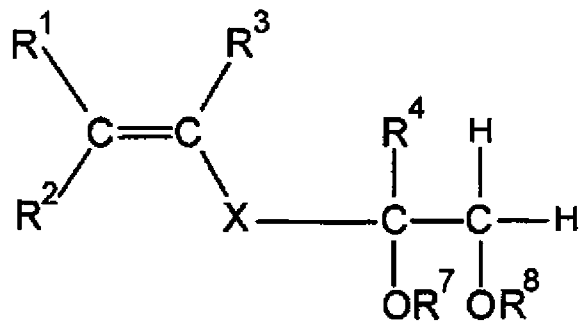

(2)

(In the general formula (2), $R^1$ to $R^4$ each independently represent a hydrogen atom or an alkyl group having 1 to 4 carbon atoms, X represents a single bond or a bond chain, and $R^7$ and $R^8$ each independently represent a hydrogen atom or $R^9$-CO- (wherein, $R^9$ is an alkyl group having 1 to 4 carbon atoms).)

[Chem. 3]

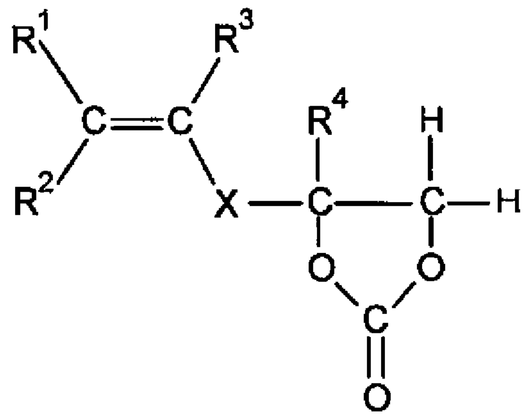

(3)

(In the general formula (3), $R^1$ to $R^4$ each independently represent a hydrogen atom or an alkyl group having

1 to 4 carbon atoms, and X represents a single bond or a bond chain.)

[Chem. 4]

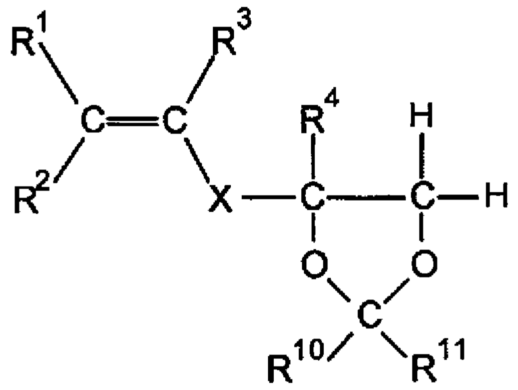

(4)

(In the general formula (4), $R^1$ to $R^4$ each independently represent a hydrogen atom or an alkyl group having 1 to 4 carbon atoms, X represents a single bond or a bond chain, and $R^{10}$ and $R^{11}$ each independently represent a hydrogen atom or an alkyl group having 1 to 4 carbon atoms.)

Specific examples and preferred examples of $R^1$ to $R^4$ and X in the general formulas (2) to (4) are the same as those in the above general formula (1), and specific examples and preferred examples of the alkyl group having 1 to 4 carbon atoms of $R^7$ to $R^{11}$ are also the same as those of the general formula (1).

Among the above methods, the method (i) is preferred in that copolymerization reactivity and industrial handling are excellent. In particular, as the compound represented by the general formula (2), it is preferable to use 3,4-diacyloxy-1-butene in which $R^1$ to $R^4$ are hydrogen atoms, X is a single bond, $R^7$ and $R^8$ are $R^9$-CO-, and $R^9$ is an alkyl group having 1 to 4 carbon atoms. Among these, 3,4-diacetoxy-1-butene in which $R^9$ is a methyl group is particularly preferably used.

The PVA-based resin for use in the present invention may be composed of one type of resin, or may be a mixture of two or more types of resins. In the case of using two or more types of PVA-based resins, for example, a combination of two or more unmodified PVA-based resins with different degrees of saponification, viscosity average polymerization degrees, or melting points; a combination of an unmodified PVA-based resin and a modified PVA-based resin; a combination of two or more modified PVA-based resins with different degrees of saponification, viscosity average polymerization degrees, melting points, functional group types or modification rates; or a combination of PVA produced by melt molding and PVA obtained without melt molding is used. It is preferable that average values of the degree of saponification, the average polymerization degrees, the modification rates or the like are within preferred ranges of the present invention.

The form of the PVA-based resin for use in the present invention is, for example, cylindrical (pellet), spherical, or powdery, and is preferably columnar or powdery in terms of improving the sealing effect and production. When used, it is preferably a mixture thereof.

When the form of the PVA-based resin for use in the present invention is cylindrical (pellet), the diameter is preferably 0.5 mm to 4.0 mm, more preferably 1.0 mm to 3.5 mm, and still more preferably 1.5 mm to 3.0 mm; and the thickness is preferably 0.5 mm to 4.0 mm, more preferably 1.0 mm to 3.0 mm, and still more preferably 1.5 mm to 2.5 mm.

When the form of the PVA-based resin for use in the present invention is powdery, the average particle diameter is preferably 10 $\mu$m to 1,000 $\mu$m, and more preferably 100 $\mu$m to 500 $\mu$m. The average particle diameter is a diameter at which the integrated value (cumulative distribution) is 50% when a particle diameter-based volume distribution is measured by laser diffraction.

When the diameter, the thickness and the average particle diameter are too large, the water solubility tends to decrease, and when the diameter, the thickness and the average particle diameter are too small, the sealing effect tends to decrease.

[Diverting Agent]

The diverting agent of the present invention contains the above PVA-based resin. The content of the PVA-based resin is preferably 50 mass% to 100 mass%, more preferably 80 mass% to 100 mass%, and still more preferably 90 mass% to 100 mass% with respect to the entire diverting agent. When the content is too small, the effects of the present invention tend to be difficult to obtain.

In addition to the PVA-based resin, additives such as sand, iron, ceramic, and other biodegradable resins can be blended in the diverting agent of the present invention.

The amount of the additive to be blended is preferably 50 mass% or less, more preferably 20 mass% or less, and still more preferably 10 mass% or less with respect to the entire diverting agent.

When petroleum, natural gas, or the like is excavated in a hydraulic fracturing method, the diverting agent of the present invention enters fractures or fissures formed in the well, and then temporarily fills the fractures or fissures, so that new fractures or fissures can be formed. As a method for filling the fractures or fissures, the diverting agent of the present invention is allowed to flow into the fracture to be filled with a flow of fluid in the well.

Further, since the diverting agent of the present invention is water-soluble and biodegradable, the diverting agent is rapidly dissolved in water and removed after use, and is then biodegraded. Therefore, the environmental load is small, and the diverting agent is very useful.

Examples

The present invention will be specifically described by way of the following Examples, but the present invention is not limited thereto.

In Examples, "parts" and "%" mean mass basis unless otherwise specified.

[Example 1]

<Preparation of PVA-1>

Into a reaction can equipped with a reflux condenser, a dropping device, and a stirrer, 28 parts of vinyl acetate (total 28% for initial charge) and 30 parts of methanol were charged, the temperature was raised under a nitrogen stream while stirring to reach the boiling point, and then 0.060 part of acetyl peroxide was charged to start polymerization.

After 0.4 hour from the start of polymerization, 72 parts of vinyl acetate was dropped at a constant speed over 9.5 hours. When the polymerization rate of vinyl acetate was 91%, a predetermined amount of hydroquinone monomethyl ether was added to complete the polymerization, and then distillation was performed while blowing methanol vapor to remove unreacted vinyl acetate monomer out of the system to obtain a methanol solution of a vinyl acetate polymer.

Then, the above solution was diluted with methanol and adjusted to have a solid content concentration of 50%. The solution temperature was maintained at 45°C, and a methanol solution of 2% sodium hydroxide (in terms of sodium) was added in an amount of 9.2 mmol with respect to 1 mol of vinyl acetate structural units, thereby performing saponification. As the saponification proceeded, a saponified product was precipitated, and when the form of the precipitated saponified product was turned into a cake shape, the cake was crushed on a belt. Thereafter, acetic acid for neutralization was added, and the saponified product was filtered, well washed with methanol and dried in a hot air dryer to obtain a PVA-based resin (PVA-1).

<Evaluation of PVA-1 >

(Degree of Saponification)

The degree of saponification of PVA-1 was determined by the amount of alkali consumed for hydrolysis of the residual vinyl acetate structural unit in the resin according to JIS K 6726:1994. The results are shown in Table 1.

(Average Polymerization Degree)

The average polymerization degree of PVA-1 was analyzed according to JIS K 6726:1994. The results are shown in Table 1.

(Average Particle Diameter)

PVA-1 was sieved by a dry sieving test method, and the particle diameter at which the integrated value was 50% was calculated and used as the average particle diameter of PVA-1. The results are shown in Table 1.

(Dissolution Rate after 15 Minutes)

A 140 mL glass container with a lid containing 100 g of water was put into a thermostatic chamber, and the water temperature was set to 23°C. The long sides of 120 mesh (aperture: 125 μm, 10 cm × 7 cm) made of nylon were

folded in half, and both ends were heat-sealed to obtain a bag-like mesh (5 cm × 7 cm).

1 g of PVA-1 was put into the obtained bag-like mesh, the opening was heat-sealed to obtain a bag-like mesh containing PVA-1, and then the mass was measured. The bag-like mesh containing PVA-1 was immersed in the glass container. After standing for 15 minutes in the thermostatic chamber at 23°C, the bag-like mesh containing PVA-1 was taken out of the glass container and dried at 140°C for 3 hours, and the mass of the bag-like mesh containing PVA-1 was measured. The mass of PVA-1 remaining in the bag-like mesh was calculated based on the mass before immersion, and the dissolution rate after 15 minutes of PVA-1 was calculated according to the following equation. The results are shown in Table 1.

In following equation, the solid fraction (mass%) of the PVA-based resin can be calculated by drying the PVA-based resin at 105°C for 3 hours and measuring the mass of the PVA-based resin before and after drying.

[Math. 2]

$$\text{DISSOLUTION RATE AFTER 15 MINUTES (MASS\%)} = \left\{ 1\ (\text{g}) - \frac{\text{MASS (g) OF PVA-BASED RESIN REMAINING IN BAG-LIKE MESH}}{1\,(\text{g}) \times \dfrac{\text{SOLID FRACTION (MASS\%) OF PVA-BASED RESIN}}{100}} \right\} \times 100$$

(Cohesiveness)

A 140 mL glass container with a lid containing 100 g of water was put into a thermostatic chamber, and the water temperature was set to 23°C. The long sides of 120 mesh (aperture: 125 μm, 10 cm × 7 cm) made of nylon were folded in half, and both ends were heat-sealed to obtain a bag-like mesh (5 cm × 7 cm).

1 g of PVA-1 was put into the obtained bag-like mesh, the opening was heat-sealed to obtain a bag-like mesh containing PVA-1. The bag-like mesh containing PVA-1 was immersed in the glass container. After standing for 15 minutes in the thermostatic chamber at 23°C, the bag-like mesh containing PVA-1 was taken out of the glass container.

PVA-1 was taken out from the bag-like mesh, visually observed, and evaluated according to the following criteria. The results are shown in Table 1.

A: agglutination of PVA was confirmed.
B: no agglutination of PVA was confirmed.

[Example 2]

<Preparation of PVA-2>

A PVA-based resin (PVA-2) was obtained in the same manner as in Example 1 except that the initial charge rate of vinyl acetate was set to 20%, 32 parts of methanol was charged, the polymerization was terminated when the polymerization rate of vinyl acetate reached 90%, the solid content concentration when diluted with methanol was 58%, and the amount of a methanol solution of 2% sodium hydroxide (in terms of sodium) added was 4.5 mmol.

<Evaluation of PVA-2>

Evaluation of PVA-2 was performed in the same manner as PVA-1. The results are shown in Table 1.

[Example 3]

<Preparation of PVA-3>

Into a reaction can equipped with a reflux condenser, a dripping device, and a stirrer, 40 parts of vinyl acetate (total 40% for initial charge), 28 parts of methanol and 2.40 parts of 3,4-diacetoxy-1-butene (total 40% for initial charge) were charged, the temperature was raised under a nitrogen stream while stirring to reach the boiling point, and then 0.137 part of acetyl peroxide was added to start polymerization.

After 0.5 hour from the start of polymerization, 60 parts of vinyl acetate and 3.60 parts of 3,4-diacetoxy-1-butene were dropped at a constant speed over 6 hours. When the polymerization rate of vinyl acetate was 92%, a predetermined amount of hydroquinone monomethyl ether was added to complete the polymerization, and then distillation was performed while blowing methanol vapor to remove unreacted vinyl acetate monomer out of the system to obtain a methanol solution of a copolymer.

Then, the above solution was diluted with methanol to adjust the solid content concentration to 50%. This methanol solution was charged into a kneader. The solution temperature was maintained at 35°C, and a methanol solution of 2% sodium hydroxide (in terms of sodium) was added in an amount of 6.0 mmol with respect to 1 mol (total amount) of vinyl acetate structural units and 3,4-diacetoxy-1-butene structural units in the copolymer, thereby performing saponification. Thereafter, acetic acid for neutralization was added in an amount corresponding to 0.8 equivalent of sodium hydroxide. The saponified product was filtered, well washed with methanol and dried in a hot air dryer to obtain a PVA-based resin (PVA-3) having a side-chain 1,2-diol structural unit.

(Modification Rate)

In PVA-3, the content (modification rate) of the 1,2-diol structural unit represented by the above formula (1) was calculated based on an integrated value determined by $^1$H-NMR (300 MHz proton NMR, a $d_6$-DMSO solution, internal standard substance: tetramethylsilane, 50°C). The results are shown in Table 1.

<Evaluation of PVA-3>

Evaluation of PVA-3 was performed in the same manner as PVA-1. The results are shown in Table 1.

[Example 4]

<Preparation of PVA-4>

Into a reaction can equipped with a reflux condenser, a dropping device, and a stirrer, 40 parts of vinyl acetate (total 40% for initial charge) and 30 parts of methanol were charged, the temperature was raised under a nitrogen stream while stirring to reach the boiling point, and then 0.050 part of acetyl peroxide was charged to start polymerization.

After 0.5 hour from the start of polymerization, 60 parts of vinyl acetate was dropped at a constant speed over 9.5 hours. When the polymerization rate of vinyl acetate was 92%, a predetermined amount of hydroquinone monomethyl ether was added to complete the polymerization, and then distillation was performed while blowing methanol vapor to remove unreacted vinyl acetate monomer out of the system to obtain a methanol solution of a vinyl acetate polymer.

Then, the above solution was diluted with methanol and adjusted to have a solid content concentration of 55%. The solution temperature was maintained at 45°C, and a methanol solution of 2% sodium hydroxide (in terms of sodium) was added in an amount of 10 mmol with respect to 1 mol of vinyl acetate structural units, thereby performing saponification. As the saponification proceeded, a saponified product was precipitated, and when the form of the precipitated saponified product was turned into a cake shape, the cake was crushed. Thereafter, acetic acid for neutralization was added, and the saponified product was filtered, well washed with methanol and dried in a hot air dryer to obtain a PVA-based resin (PVA-4).

<Evaluation of PVA-4>

Evaluation of PVA-4 was performed in the same manner as PVA-1. The results are shown in Table 1.

[Comparative Example 1]

<Preparation of PVA-5>

Into a reaction can equipped with a reflux condenser, a dropping device, and a stirrer, 20 parts of vinyl acetate (total 20% for initial charge) and 34.5 parts of methanol were charged, the temperature was raised under a nitrogen stream while stirring to reach the boiling point, and then 0.068 part of acetyl peroxide was charged to start polymerization.

After 0.4 hour from the start of polymerization, 80 parts of vinyl acetate was dropped at a constant speed over 9.5 hours. When the polymerization rate of vinyl acetate was 89%, a predetermined amount of hydroquinone monomethyl ether was added to complete the polymerization, and then distillation was performed while blowing methanol vapor to remove unreacted vinyl acetate monomer out of the system to obtain a methanol solution of a vinyl acetate polymer.

Then, the above solution was diluted with methanol and adjusted to have a solid content concentration of 54%. The solution temperature was maintained at 45°C, and a methanol solution of 2% sodium hydroxide (in terms of sodium) was added in an amount of 10 mmol with respect to 1 mol of vinyl acetate structural units, thereby performing saponification. As the saponification proceeded, a saponified product was precipitated, and when the form of the precipitated saponified product was turned into a cake shape, the cake was crushed. Thereafter, acetic acid for neutralization was added, and the saponified product was filtered, well washed with methanol and dried in a hot air dryer to obtain a PVA-based resin (PVA-5).

<Evaluation of PVA-5>

Evaluation of PVA-5 was performed in the same manner as PVA-1. The results are shown in Table 1.

[Comparative Example 2]

<Preparation of PVA-6>

Into a reaction can equipped with a reflux condenser, a dropping device, and a stirrer, 30 parts of vinyl acetate (total 30% for initial charge) and 32 parts of methanol were charged, and the temperature was raised under a nitrogen stream while stirring to reach the boiling point, and then 0.068 part of acetyl peroxide was charged to start polymerization.

After 0.4 hour from the start of polymerization, 70 parts of vinyl acetate was dropped at a constant speed over 9.5 hours. When the polymerization rate of vinyl acetate was 90%, a predetermined amount of hydroquinone monomethyl ether was added to complete the polymerization, and then distillation was performed while blowing methanol vapor to remove unreacted vinyl acetate monomer out of the system to obtain a methanol solution of a vinyl acetate polymer.

Then, the above solution was diluted with methanol and adjusted to have a solid content concentration of 55%. The solution temperature was maintained at 45°C, and a methanol solution of 2% sodium hydroxide (in terms of sodium) was added in an amount of 10 mmol with respect to 1 mol of vinyl acetate structural units, thereby performing saponification. As the saponification proceeded, a saponified product was precipitated, and when the form of the precipitated saponified product was turned into a cake shape, the cake was crushed. Thereafter, acetic acid for neutralization was added, and the saponified product was filtered, well washed with methanol and dried in a hot air dryer to obtain a PVA-based resin (PVA-6).

<Evaluation of PVA-6>

Evaluation of PVA-6 was performed in the same manner as PVA-1. The results are shown in Table 1.

[Table 1]

| | Type of PVA | Degree of saponification (mol%) | Average polymerization degree | Average particle diameter (μm) | Modification type | Modification rate (mol%) | Dissolution rate after 15 minutes (mass%) | Cohesiveness |
|---|---|---|---|---|---|---|---|---|
| Example 1 | PVA-1 | 88 | 500 | 500 | Unmodified | - | 35 | A |
| Example 2 | PVA-2 | 73 | 500 | 620 | Unmodified | - | 30 | A |
| Example 3 | PVA-3 | 88 | 450 | 200 | 1,2-diol | 3 | 32 | A |
| Example 4 | PVA-4 | 93 | 700 | 500 | Unmodified | - | 47 | A |
| Comparative Example 1 | PVA-5 | 99 | 500 | 600 | Unmodified | - | 7 | B |
| Comparative Example 2 | PVA-6 | 96 | 600 | 500 | Unmodified | - | 27 | B |

From the results in Table 1, it was found that the diverting agents of the present invention of Examples 1 to 4 did not completely dissolve for a certain period of time, and the particles had high cohesiveness.

Because of having a degree of saponification lower than that of PVA-1, PVA-3 and PVA-4, PVA-2 was more hydrophobic. As a result, in Example 2, the dissolution rate after 15 minutes was lower than that in Examples 1, 3 and 4.

Further, PVA-5 and PVA-6 had too high crystallinity due to a high degree of saponification thereof. As a result, in Comparative Examples 1 and 2, the dissolution rate after 15 minutes was lower than that in Examples 1 to 4.

Further, it was found that, among Examples 1 to 4, from the viewpoint of water solubility, the diverting agents of the present invention of Examples 1, 3 and 4 were more preferred, and the diverting agent of the present invention of Example 4 was particularly preferred.

Although the present invention has been described in detail with reference to specific embodiments, it will be apparent to those skilled in the art that various changes and modifications can be made without departing from the spirit and scope of the present invention. The present application is based on a Japanese Patent Application (Japanese Patent Application No. 2018-245095) filed on December 27, 2018, contents of which are incorporated herein by reference.

## Claims

1. A diverting agent, comprising: a polyvinyl alcohol-based resin having a degree of saponification of 65 mol% to 95 mol%.

2. The diverting agent according to claim 1, wherein the polyvinyl alcohol-based resin has a dissolution rate of 10 mass% to 50 mass% after 15 minutes of immersing 1 g of the polyvinyl alcohol-based resin in 100 g of water at 23°C.

3. A method of temporarily filling a fracture generated in a well, the method comprising:
allowing the diverting agent according to claim 1 or 2 to flow into a fracture to be filled with a flow of a fluid in the well.

## INTERNATIONAL SEARCH REPORT

International application No.
PCT/JP2019/051042

A. CLASSIFICATION OF SUBJECT MATTER
C08F 16/06(2006.01)i; C09K 8/508(2006.01)i; E21B 43/26(2006.01)i
FI: C09K8/508; C08F16/06; E21B43/26

According to International Patent Classification (IPC) or to both national classification and IPC

B. FIELDS SEARCHED

Minimum documentation searched (classification system followed by classification symbols)
C08F16/06; C09K8/508; E21B43/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JST7580/JSTChina (JDreamIII); CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | CN 107286916 A (CHINA PETROCHEMICAL CORP.) 24.10.2017 (2017-10-24) claims, examples | 1-3 |
| X | CN 107286923 A (CHINA PETROCHEMICAL CORP.) 24.10.2017 (2017-10-24) claims, examples | 1-3 |
| X | US 2016/0137906 A1 (CONOCOPHILLIPS COMPANY) 19.05.2016 (2016-05-19) claims, figures, paragraphs [0005]-[0010], [0052], [0089] | 1-3 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 March 2020 (26.03.2020) | 07 April 2020 (07.04.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2019/051042

| Patent Documents referred in the Report | Publication Date | Patent Family | Publication Date |
|---|---|---|---|
| CN 107286916 A | 24 Oct. 2017 | (Family: none) | |
| CN 107286923 A | 24 Oct. 2017 | (Family: none) | |
| US 2016/0137906 A1 | 19 May 2016 | AU 2015350513 A1<br>AU 2019257441 A1<br>CA 2968354 A1<br>CN 107250320 A<br>EP 3221418 A1<br>WO 2016/081049 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015072317 A
- JP 2016056272 A
- JP 2016147971 A
- JP 2016147972 A
- JP 2002284818 A
- JP 2004285143 A
- JP 2006095825 A
- JP 2018245095 A